Europäisches Patentamt

European Patent Office

Office européen des brevets

(11) Veröffentlichungsnummer: **0 251 214**
**A2**

(12) EUROPÄISCHE PATENTANMELDUNG

(21) Anmeldenummer: 87109150.0

(22) Anmeldetag: 25.06.87

(51) Int. Cl.⁴: **F01P 7/16** , F01P 3/20

(30) Priorität: 03.07.86 DE 3622378

(43) Veröffentlichungstag der Anmeldung:
07.01.88 Patentblatt 88/01

(84) Benannte Vertragsstaaten:
**CH DE ES FR IT LI NL**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Wieners, Alfred, Dipl.-Ing
Ettighofferstrasse 10
D-5300 Bonn 1(DE)**

(54) **Kühlflüssigkeitssystem für eine Brennkraftmaschine.**

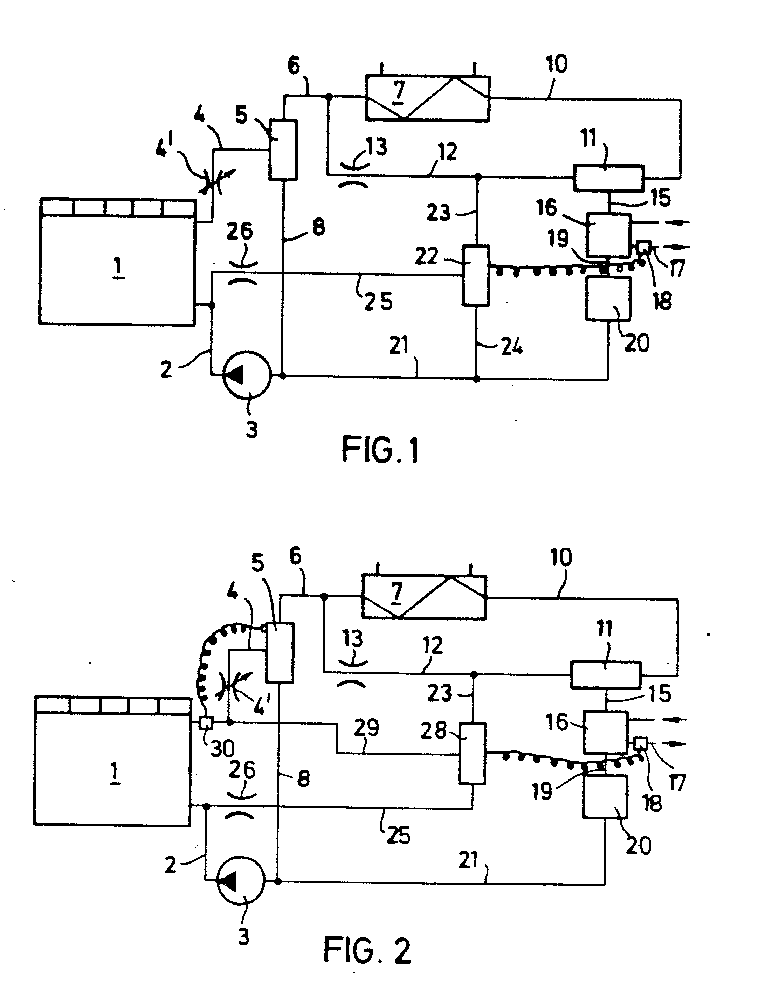

(57) Kühlflüssigkeitssystem für eine Brennkraftmaschine 1 mit einer Pumpe 3, einem der Brennkraftmaschine nachgeschalteten thermostatischen Regelventil 5, von dem einerseits ein Bypaß 8 abzweigt und an den andererseits ein über einen Wärmetauscher 7 und eine dazu parallele Leitung 12 ein zweites thermostatisches Regelventil 11 anschließt, das über nachgeschaltete Kühler 16, 20 mit der Saugseite der Pumpe verbunden ist, wobei an die Druckleitung 2 der Pumpe 3 ein drittes thermostatisches Regelventil 28 angeschlossen ist, das sowohl zur Umgehung der Brennkraftmaschine 1 für eine Teilmenge von Kühlflüssigkeit zur Vermeidung von Kavitation, als auch bei Leerlauf zur Versorgung eines Ölkühlers 16 bzw. eines Ladeluftkühlers mit Kühlflüssigkeit dient (Fig. 2).

FIG. 1

EP 0 251 214 A2

## Kühlflüssigkeitssystem für eine Brennkraftmaschine

Die Erfindung bezieht sich auf ein Kühlflüssigkeitssystem für eine Brennkraftmaschine mit einem durch ein erstes thermostatisches 3/Wegeventil geregelten Bypaß, mit einer von diesem 3/Wegeventil abzweigenden Kühlerleitung, in die ein Wärmetauscher und parallel dazu eine Drossel sowie ein zweites thermostatisches 3/Wegeventil eingebaut sind, das seinerseits über einen Ölkühler und einen Ladeluftkühler mit der Saugseite einer Pumpe in Verbindung steht, an die saugseitig der vom ersten 3/Wegeventil ausgehende Bypaß und druckseitig die Brennkraftmaschine angeschlossen sind.

Es ist bekannt (Motor PA 6/280 der S.E.M.T. - Pielstick), ein Flüssigkeitskühlsystem obengenannter Art zu verwenden, bei dem zusätzlich zu der thermostatischen Regelung der Durchflußmenge durch den Wärmetauscher und dessen Bypaßleitung ein weiteres thermostatisch geregeltes Ventil am Austritt der Kühlflüssigkeit aus der Brennkraftmaschine angeordnet ist, das die Kühlflüssigkeit in Abhängigkeit von ihrer Temperatur in die zum Wärmetauscher, Ölkühler und Ladeluftkühler führende Leitung oder in einen Bypaß leitet, der mit der Saugseite der Pumpe in Verbindung steht. Ein solches Einkreiskühlsystem zeigt insbesondere beim Leerlaufbetrieb der Brennkraftmaschine Mängel. So kann die Kühlflüssigkeitstemperatur in der Brennkraftmaschine von Vollast nach Leerlauf um bis zu 20° C abfallen. Bei Antrieben im Wechsellastbetrieb oder im häufigen Teillastbetrieb sorgen diese Temperaturdifferenzen für ein zusätzliches, ständiges unterschiedliches Arbeiten der Materialien, die eine Mitschuld an zu frühen Ausfällen durch Undichtigkeiten an Verschlußstopfen und am Dichtverband Zylinderlaufbuchse-Gestell sowie Korrosionsschäden an Abgaskrümmern, Kolben und Kolbenringen als auch Ölverbrauchssteigerungen durch zu tiefe Temperaturen auf der Lauffläche der Zylinderlaufbuchse zur Folge haben. Außerdem kann es beispielsweise bei Leerlauf der Brennkraftmaschine vorkommen, daß keine oder nur sehr wenig Kühlflüssigkeit durch den Wärmetauscher bzw. durch die Bypaßleitung fließt, so daß dann die nachgeschalteten Kühler für Öl und Ladeluft für eine ausreichende Kühlung zu wenig Kühlflüssigkeit erhalten.

Der Erfindung liegt die Aufgabe zugrunde, die vorstehend genannten Schwierigkeiten zu vermeiden und ein Flüssigkeitskühlsystem der eingangs umrissenen Art mit möglichst einfachen Mitteln dahingehend zu verbessern, daß die Kühlflüssigkeit beim Betrieb einer Brennkraftmaschine zwischen Vollast und Leerlauf eine möglichst geringe Temperatur-differenz aufweist. Dabei soll im Leerlauf die Versorgung insbesondere des Ölkühlers mit einer ausreichenden Kühlflüssigkeitsmenge sichergestellt sein.

Die Aufgabe wird erfindungsgemäß dadurch gelöst, daß das Kühlsystem mit einem dritten thermostatischen 3/Wegeventil ausgestattet ist, das zu seiner Regelung mit einem in der Ausgangsleitung des Ölkühlers angeordneten Temperaturfühler verbunden ist und daß das dritte thermostatische 3/Wegeventil zulaufseitig an die Druckseite der Pumpe angeschlossen ist und als Umgehung der Brennkraftmaschine für einen Teilstrom der geförderten Kühlflüssigkeit dient. Durch eine solche Anordnung eines dritten thermostatischen 3/Wegeventils im Flüssigkeitskühlsystem wird erreicht, daß durch dessen Regelung bei Teillastbetrieb die Temperatur der Kühlflüssigkeit weitgehend beständig ist und ggfs. zur Anhebung der Temperatur des Schmieröls bzw. der Ladeluft genutzt werden kann. Außerdem steht dem Ölkühler unabhängig von der Betriebstemperatur der Brennkraftmaschine stets eine angemessene Kühlflüssigkeitsmenge zur Verfügung.

Die Erfindung kann in vorteilhafter Weise auch so ausgeführt sein, daß das dritte thermostatische 3/Wegeventil, das zulaufseitig mit der Druckseite der Pumpe in Verbindung steht, mit einem Abgang an die Leitung zwischen dem ersten und dem zweiten thermostatischen 3/Wegeventil in Strömungsrichtung hinter der Drossel und mit dem anderen Abgang an eine Leitung an der Saugseite der Pumpe angeschlossen ist.

Es kann aber auch zweckdienlich sein, wenn das dritte thermostatische 3/Wegeventil, das zulaufseitig mit der Druckleitung der Pumpe in Verbindung steht, mit einem Abgang an die Leitung zwischen dem ersten und zweiten thermostatischen 3/Wegeventil in Strömungsrichtung hinter der Drossel und mit dem anderen Abgang an die Ausgangsleitung der Kühlflüssigkeit unmittelbar hinter der Brennkraftmaschine angeschlossen ist.

In Weiterbildung der Erfindung ist das temperaturabhängig regelbare erste 3/Wegeventil zu seiner Regelung mit einem in der Austrittsleitung der Kühlflüssigkeit unmittelbar am Ausgang der Brennkraftmaschine angeordneten Temperaturfernfühler verbunden.

Schließlich ist zum Ausgleich der Strömungsverhältnisse im Kühlsystem vorgesehen, daß das dritte thermostatische 3/Wegeventil in seiner mit der Druckseite der Pumpe verbundenen Leitung ein Drosselorgan aufweist.

Zwei Ausführungsbeispiele der Erfindung werden im folgenden anhand der Zeichnung näher beschrieben. Es zeigt:

Fig. 1 eine schematische Darstellung eines Kühlflüssigkeitssystems einer Brennkraftmaschine mit einem dritten thermostatischen 3/Wegevenil gemäß der Erfindung,

Fig. 2 ein anderes Ausführungsbeispiel.

Die Fig. 1 zeigt eine mit Dieselkraftstoff betriebene aufgeladene Brennkraftmaschine 1, die zur Förderung ihrer Kühlflüssigkeit eine mit der Brennkraftmaschine 1 durch eine Druckleitung 2 verbundene Pumpe 3 aufweist. Der Austritt der Kühlflüssigkeit aus der Brennkraftmaschine 1 erfolgt durch eine Leitung 4, die über eine einstellbare Drossel 4' in einem ersten thermostatischen 3/Wegeventil 5 mündet. Am 3/Wegeventil 5, das abhängig von der Temperatur der Kühlflüssigkeit am Anschluß der Leitung 4 geregelt wird, zweigt eine Kühlerleitung 6 mit einem Wärmetauscher 7 sowie ein hierzu verlaufenden Bypaß 8 ab. In Strömungsrichtung hinter dem Wärmetauscher 7 führt eine Leitung 10 zu einem zweiten thermostatischen 3/Wegeventil 11, das mit einem anderen Anschluß durch eine Leitung 12 mit einer Drossel 13 mit der Leitung 6 an der Eingangsseite des Wärmetauschers 7 verbunden ist. Der regelbare Ausgang 15 des 3/Wegeventils 11 steht mit einem Ölkühler 16 in Verbindung, in dessen ausgangsseitige Ölleitung 17 ein Temperaturfernfühler 18 eingebaut ist.

Vom Ölkühler 16 führt eine Leitung 19 zu einem Ladeluftkühler 20, der seinerseits durch eine Leitung 21 mit der Saugseite der Pumpe 3 in Verbindung steht. Ein drittes thermostatisches 3/Wegeventil 22 ist durch eine Leitung 23 mit der Leitung 12 sowie durch eine Leitung 24 mit der Leitung 21 verbunden. Außerdem besteht eine Verbindung des dritten thermostatischen 3/Wegeventils 22 mit der Druckleitung 2 durch eine Leitung 25 mit eingebauter Drossel 26. Das 3/Wegeventil 22 ist ferner zu seiner Regelung elektrisch an den Temperaturfernfühler 18 angeschlossen.

Bei Vollastbetrieb der Brennkraftmaschine 1 stellt sich das 3/Wegeventil 5 so ein, daß die größte Menge der von der Pumpe 3 durch die Brennkraftmaschine 1 geförderten Kühlflüssigkeit in die Leitung 6 gelangt und von hier je nach Regelung des 3/Wegeventils 11 teils durch den Wärmetauscher 7, teils durch die Leitung 13 zum 3/Wegeventil 11 strömt. Dieses Ventil 11 ist so abgestimmt, daß es durch Mischung der vom Wärmetauscher 7 rückgekühlten und der durch die Leitung 12 ankommenden ungekühlten Kühlflüssigkeit ausgangsseitig eine Flüssigkeitstemperatur bewirkt, die sowohl für den nachgeschalteten Ölkühler 16 als auch für den Ladeluftkühler 20 zur Kühlung der diese durchströmenden Medien geeignet ist. Ein Teil der von der Pumpe 3 geförderten Kühlflüssigkeitsmenge strömt aber auch von der Druckleitung 2 der Pumpe 3 durch die Leitung 25 und die eingebaute Drossel 26 zum 3/Wegeventil 22 und wird von diesem durch die Leitung 24 zur Leitung 21 an der Saugseite der Pumpe 3 zurückgeführt. Dieser vor der Brennkraftmaschine 1 von der Leitung 2 abgezweigte Kühlflüssigkeitsstrom wird regelmäßig so bemessen, daß der durch die Brennkraftmaschine 1 hindurchfließende Kühlflüssigkeitsstrom eine höchstzulässige Strömungsgeschwindigkeit nicht überschreitet, um Kavitation in den Kühlkanälen der Brennkraftmaschine 1 weitgehend zu vermeiden. Bei diesem Betriebszustand der Brennkraftmaschine 1 fließt ausreichend Kühlflüssigkeit vom 3/Wegeventil 5 durch den Wärmetauscher 7 bzw. die Drossel 13 zum 3/Wegeventil 11, so daß hierdurch die Versorgung des Ölkühlers 16 mit entsprechend temperierter Kühlflüssigkeit sichergestellt ist. Hierbei ist das 3/Wegeventil 22 gegenüber der Leitung 23 gesperrt.

Bei relativ niedriger Temperatur der Kühlflüssigkeit am 3/Wegeventil 5, beispielsweise bei Leerlauf der Brennkraftmaschine 1, wird das Ventil 5 durch die Eingangstemperatur so geregelt, daß der Hauptteil der aus der Brennkraftmaschine 1 durch die Leitung 4 austretenden Kühlflüssigkeitsmenge durch den Bypaß 8 zur Saugseite der Pumpe 3 zurückfließt. Bei dieser Einstellung des 3/Wegeventils 5 fließt keine oder nur eine geringe Kühlflüssigkeitsmenge vom 3/Wegeventil 5 zur Kühlerleitung 6. Die zur Kühlung für den Ölkühler 16 benötigte Kühlflüssigkeitsmenge gelangt bei diesem Betriebszustand der Brennkraftmaschine 1 von der Druckleitung 2 der Pumpe 3 direkt durch das 3/Wegeventil 22 zur Leitung 12. Von hier strömt die Kühlflüssigkeit teils durch die Drossel 13, den Wärme tauscher 7 und die Leitung 10, teils unmittelbar zum 3/Wegeventil 11, das die Versorgung der nachgeschalteten Kühler 16, 20 mit Kühlflüssigkeit entsprechender Temperatur bewirkt. Diese Arbeitsweise des Kühlflüssigkeitssystems, bei dem die für die Versorgung der Kühler 16, 20 benötigte Kühlflüssigkeitsmenge von der Pumpe 3 durch das 3/Wegeventil 22 zum 3/Wegeventil 11 geleitet wird, ist jeweils abhängig von der Betriebstemperatur der Brennkraftmaschine 1 und der Temperatur des Öls am Ausgang des Ölkühlers 16.

Das Kühlflüssigkeitssystem gemäß Fig. 2 unterscheidet sich von demjenigen gemäß Fig. 1 nur durch eine andere Schaltung der beiden 3/Wegeventile 5 und 22. Es wurden daher in beiden Ausführungsbeispielen für gleiche Bauteile übereinstimmende Bezugszahlen eingesetzt. In Fig.

2 ist das thermostatische 3/Wegeventil 5 zu seiner Regelung mit einem Temperaturfernfühler 30 verbunden, der in der Leitung 4 unmittelbar am Austritt aus der Brennkraftmaschine 1 angeordnet ist. Das hierbei mit 28 bezeichnete dritte thermostatische 3/Wegeventil ist mit seinen Leitungen 23 und 25 an die Leitung 12 bzw. 2 angeschlossen, während es mit einer dritten Leitung 29 mit der Leitung 4 nahe dem Temperaturfernfühler 30 in Verbindung steht. ·

Arbeitet die Brennkraftmaschine 1 bei diesem System mit Vollast, dann fließt bei entsprechender Einstellung der Drossel 4' ein Kühlflüssigkeitsstrom durch die Brennkraftmaschine, welcher ausreicht, die Temperatur auf etwa 80° C zu halten. Die darüberhinaus von der Pumpe 3 geförderte Kühlflüssigkeitsmenge gelangt durch die Leitung 25 und die Drossel 26 zum 3/Wegeventil 28 und von hier durch die Lei tungen 29, 4 unmittelbar zum 3/Wegeventil 5. Hierbei ist einerseits dafür gesorgt, daß die Brennkraftmaschine 1 ausreichend Kühlflüssigkeit erhält, um in einem günstigen Temperaturbereich zu arbeiten. Andererseits wird die überschüssige Fördermenge der zur Versorgung evtl. weiterer Verbraucher reichlich bemessenen Pumpe 3 an der Brennkraftmaschine 1 durch das 3/Wegeventil 28 vorbeigeleitet, um in deren Kühlkanälen Kavitation durch überhöhte Strömungsgeschwindigkeit weitgehend zu vermeiden. Die zur Versorgung des Ölkühlers 16 und des folgenden Ladeluftkühlers 20 erforderliche Kühlflüssigkeitsmenge gelangt vom 3/Wegeventil 5 ungekühlt bzw. rückgekühlt zum 3/Wegeventil 11 und wird von diesem angemessen temperiert den nachgeschalteten Kühlern 16, 20 zugeführt. Dabei ist das 3/Wegeventil 28 gegenüber der Leitung 23 gesperrt.

Bei Leerlauf der Brennkraftmaschine 1 regelt sich das thermostatische 3/Wegeventil 5 so ein, daß entsprechend der niedrigen Betriebstemperatur im wesentlichen keine Kühlflüssigkeit mehr zum Wärmetauscher 7 gelangt. Die gesamte Kühlflüssigkeit strömt hierbei durch den Bypaß 8 zurück zur Saugseite der Pumpe 3, da keine Kühlung erforderlich ist. Ein Teil der von der Pumpe 3 zum 3/Wegeventil 28 strömenden Kühlflüssigkeit fließt bei diesem Betrieb der Brennkraftmaschine 1 durch die Leitung 25 und die Drossel 26 zum 3/Wegeventil 28 und von hier durch die Leitung 23 zur Leitung 12. Der Anteil der jeweils vom 3/Wegeventil 28 zur Leitung 12 gelangenden Fördermenge ist abhängig von der Temperatur des Öls am Temperaturfernfühler 18, der die Regelung des 3/Wegeventils 28 beherrscht. In der Leitung 12 wird je nach Regelstellung des 3/Wegeventils 11 eine Teilmenge der Kühlflüssigkeit direkt diesem zugeführt und ein anderer Teil wird durch die Drossel 13, den Wärmetauscher 7 und die Leitung 10 zum 3/Wegeventil 11 geführt. Durch Mischung von warmer und rückgekühlter Kühlflüssigkeit im 3/Wegeventil 11 wird die für die nachgeschalteten Kühler 16 und 20 erforderliche Kühlflüssigkeitstemperatur erzielt.

Damit ist insbesondere bei Leerlauf bzw. im Teillastbereich der Brennkraftmaschine dafür gesorgt, daß dieser zur Erhaltung ihrer Betriebstemperatur jeweils eine angemessene Kühlflüssigkeitsmenge erhält und daß stets eine ausreichende Kühlflüssigkeitsmenge zur Versorgung des Ölkühlers 16 bzw. des nachgeschalteten Ladeluftkühlers 20 zur Verfügung steht.

## Ansprüche

1. Kühlflüssigkeitssystem für eine Brennkraftmaschine (1) mit einem durch ein erstes thermostatisches 3/Wegeventil (5) geregelten Bypaß (8), mit einer von diesem 3/Wegeventil (5) abzweigenden Kühlerleitung (6) , in die ein Wärmetauscher (7) und parallel dazu eine Drossel (13) sowie ein zweites thermostatisches 3/Wegeventil (11) eingebaut sind, das seinerseits über einen Ölkühler (16) und einen Ladeluftkühler (20) mit der Saugseite einer Pumpe (3) in Verbindung steht, an die saugseitig der vom ersten 3/Wegeventil (5) ausgehende Bypaß (8) und druckseitig die Brennkraftmaschine (1) angeschlossen sind, dadurch gekennzeichnet, daß das Kühlflüssigkeitssystem mit einem dritten thermostatischen 3/Wegeventil (22 bzw. 28) ausgestattet ist, das zu seiner Regelung mit einem in der Ausgangsleitung (17) des Ölkühlers (16) angeordneten Temperaturfernfühler (18) verbunden ist und daß das dritte thermostatische 3/Wegeventil (22 bzw. 28) zulaufseitig an die Druckseite der Pumpe (3) angeschlossen ist und als Umgehung der Brennkraftmaschine (1) für einen Teilstrom der geförderten Kühlflüssigkeit dient.

2. Kühlflüssigkeitssystem nach Anspruch 1, dadurch gekennzeichnet, daß das dritte thermostatische 3/Wegeventil (22) , das zulaufseitig mit der Druckseite der Pumpe (3) in Verbindung steht, mit einem Abgang an die Leitung (12) zwischen dem ersten und dem zweiten thermostatischen 3/Wegenventil (5 bzw. 11) in Strömungsrichtung hinter der Drossel (13) und mit dem anderen Abgang an eine Leitung (21) an der Saugseite der Pumpe (3) angeschlossen ist.

3. Kühlflüssigkeitssystem nach Anspruch 1, dadurch gekennzeichnet, daß das dritte thermostatische 3/Wegenventil (28), das zulaufseitig mit der Druckseite der Pumpe (3) in Verbindung steht, mit einem Abgang an die Leitung (12) zwischen dem ersten und zweiten thermostatischen 3/Wegeventil (5 bzw. 11) in Strömungsrichtung hinter der Drossel (13) und mit dem anderen Abgang an die Ausgangsleitung (4) der Kühlflüssigkeit unmittelbar hinter der Brennkraftmaschine (1) angeschlossen ist.

4. Kühlflüssigkeitssystem nach den Ansprüche 1 und 3,
dadurch gekennzeichnet, daß das erste 3/Wegenventil (5) temperaturabhängig fernregelbar ausgeführt ist und zu seiner Regelung mit einem in der Ausgangsleitung (4) der Kühlflüssigkeit unmittelbar am Ausgang der Brennkraftmaschine (1) angeordneten Temperaturfernfühler (30) verbunden ist.

5. Kühlflüssigkeitssystem nach einem der vorhergehenden Ansprüche,
dadurch gekennzeichnet, daß das dritte thermostatische 3/Wegeventil (22 bzw. 28) in seiner mit der Druckseite der Pumpe (3) verbundenen Leitung (25) ein Drosselorgan (26) aufweist.

FIG.1

FIG. 2